# EUROPEAN PATENT APPLICATION

(11) **EP 2 034 715 A1**
(43) Date of publication of application: **11.03.2009**
(21) Application number: 07791758.1
(22) Date of filing: 01.08.2007
(51) Int. Cl.: H04N 1/387

(54) **OVERLAY INFORMATION PRESENTATION DEVICE AND OVERLAY INFORMATION PRESENTATION SYSTEM**

(30) Priority: 03.08.2006 JP 2006212333
(71) Applicant: Panasonic Corporation, Kadoma-shi Osaka 571-8501 (JP)
(72) Inventor: HAMASAKI, Koji Pansonic Corporation, IPROC,IP, 2-chome, Chuo-ku, Osaka-shi, Osaka 540-6207 (JP); MOTOSAKA, Kinichi Pansonic Corporation, IPROC,IP, 2-chome, Chuo-ku, Osaka-shi, Osaka 540-6207 (JP)
(74) Representative: Pautex Schneider, Nicole Véronique
(86) International application number: PCT/JP2007/065078
(87) International publication number: WO 2008/016083

(57) **Abstract**

A superimposition information presentation apparatus is presented, which is capable of superimposing information suitable to a user's preference on an image captured arbitrarily by the user and presenting the image having the superimposed information. An image obtaining unit (205) of the superimposition information presentation apparatus (101) is, for example, a digital camera, and converts a captured image into image data and stores the image data into a recording unit (201). An analysis unit (206) analyzes the image obtained by the image obtaining unit (205) and extracts related information for to-be-superimposed information. A superimposition data selection unit (303) identifies information to be superimposed, base on the extracted related information. A superimposing unit (207) superimposes the information identified by the superimposition data selection unit (303) on the image obtained by the image obtaining unit (205) and presents the image having the superimposed information on an output unit (208) such as a liquid crystal display device.

## Description

### Technical Field

The present invention relates to a technique that superimposes an image or information for advertisement on a moving image or a static image captured using a digital video camera and the like and presents the moving image or the static image having the superimposed image or information to a user.

### Background Art

With the widespread use of digital video cameras (also referred to as "digital cameras") and mobile phones equipped with function of a camera, the occasion for shooting landscapes, buildings, and the like has been increased in recent years. Along with that, techniques for presenting advertising information or service information to a user by superimposing information related to captured landscapes or buildings on an image and displaying the image having the superimposed information have been proposed.

For example, a system has been proposed which superimposes advertising information and the like suitable to an image captured using a camera mounted on the front end of a railroad vehicle or an airplane on the captured image and displays the image having the superimposed information (see, for example, Patent Reference 1). In the above system, a method for superimposing information obtained from a predetermined sever on the captured image and displaying the image having the superimposed information has been disclosed.
Patent Reference 1: Japanese Unexamined Patent Application Publication No. 2005-14784

### Disclosure of Invention

### Problems that Invention is to Solve

In the conventional system, however, information to be displayed is not necessarily suitable to a user's preference since the information to be superimposed on images shot at the front end of a railroad vehicle or an airplane (since routes of these public transportation are predetermined in principle, the images are mostly in a same pattern.) is associated in advance with each of the images. Thus, this poses a problem of limiting an advertising target since information can not be superimposed on an image captured by a user arbitrarily with a user's camera.

The present invention has been conceived in view of the above-described problem and aims to provide a superimposition information presentation apparatus and the like capable of superimposing information suitable to a user's preference on an image captured arbitrarily by the user and presenting the image having the superimposed information.

### Means to Solve the Problems

In order to solve the above-described problem, a superimposition information presentation apparatus according to the present invention superimposes information in association with an image and presents the image having the superimposed information, the apparatus including: an image obtaining unit configured to obtain an image; an analysis unit which analyzes the obtained image and extracts related information that relates to to-be-superimposed information; a superimposition data selection unit which identifies the to-be-superimposed information based on the extracted related information; and a superimposing unit which superimposes the identified information on the obtained image and presents the image having the superimposed information.

This structure makes it possible to superimpose information suitable to a user's preference on an image captured arbitrarily by the user and present the image having the superimposed information.

It should be noted that the present invention can also be implemented as a superimposition information presentation method including, as its steps, the characteristic components included in the superimposition information presentation apparatus. Further, the present invention can be implemented as a program which causes a computer to execute each of the steps of the method described above. Further, it should be understood that such a program can be widely distributed via a recording medium such as a DVD and a transmission medium such as the Internet.

Further, the present invention can also be implemented as: a server apparatus provided with the characteristic components included in the superimposition information presentation apparatus; and a superimposition information presentation system that includes the server apparatus and a terminal apparatus provided with a camera function and a communication function. Further, the present invention can also be implemented as a superimposition information providing method or a superimposition information utilizing method, each of which includes, as its steps, the characteristic components included in the server apparatus or the superimposition information presentation system described above.

### Effects of the Invention

With a superimposition information presentation apparatus according to the present invention, it is possible to superimpose information suitable to a user's preference on an image captured arbitrarily by the user and present the image having the superimposed information. Further, it is possible for the user to view a captured image on which information suitable to the user's preference is superimposed automatically, by shooting arbitrary landscape and the like. Further, it is possible for a business organization (advertiser) which provides the information to be superimposed on the image to automatically provide an advertisement suitable to the user's preference. Furthermore, a business organization that provides the superimposition information presentation apparatus can be rewarded from the advertiser for providing advertisement information.

### Brief Description of Drawings

[FIG. 1] FIG. 1 is a schematic view of a superimposition information presentation system according to an embodiment of the present invention.
[FIG. 2] FIG. 2 is a block diagram which illustrates an overview of a functional structure of the superimposition information presentation apparatus according to an embodiment of the present invention.
[FIG. 3] FIG. 3 is a block diagram which illustrates a more detailed functional structure of the superimposition information presentation apparatus according to a first embodiment.
[FIG. 4] FIG. 4 is a diagram which illustrates a specific example for superimposition-data management information according to the first embodiment.
[FIG. 5] FIG. 5 is a diagram which illustrates local information according to the first embodiment.
[FIG. 6] FIG. 6 is a flowchart which illustrates an operational flow of the superimposition information presentation apparatus according to the first embodiment.
[FIG. 7] FIG. 7 (a), (b) is an example of display of the superimposition information presentation apparatus according to the first embodiment.
[FIG. 8] FIG. 8 is an example of a message for confirming whether or not to select superimposition data.
[FIG. 9] FIG. 9 is a block diagram which illustrates a functional structure of the superimposition information presentation apparatus according to a second embodiment.
[FIG. 10] FIG. 10 is an example of a message for confirming whether or not to select local data.
[FIG. 11] FIG. 11 is a block diagram which illustrates a functional structure of the superimposition information presentation apparatus according to a third embodiment.
[FIG. 12] FIG. 12 is a flowchart which illustrates an operational flow of the superimposition information presentation apparatus according to the third embodiment.
[FIG. 13] FIG. 13 (a), (b) is a diagram for explaining a method of determining, by an analysis unit 305 according to a fourth embodiment, information and the like for identifying a sever that obtains information to be superimposed on an image, based on blinking of light that has been captured or audio that has been obtained.
[FIG. 14] FIG. 14 is a flowchart which illustrates an operational flow of the superimposition information presentation apparatus in the case where the analysis unit according to the fourth embodiment is used.

### Numerical References

- 10: superimposition information presentation system
- 101, 111: superimposition information presentation apparatus
- 102, 122: sever
- 103: superimposition information
- 201: recording unit
- 202: operation input unit

- 203: interface unit
- 204: control unit
- 205: image obtaining unit
- 206: analysis unit
- 207: superimposing unit
- 208: output unit
- 209: communication control unit
- 210: sensor unit
- 301: sever information storage unit
- 302: local information storage unit
- 303: superimposition data selection unit
- 304: local information change unit
- 305: analysis unit
- 306: superimposition unit
- 307: communication control unit
- 308: superimposition data storage unit
- 801,: 804 interface unit
- 802: superimposition data selection unit
- 803: portable medium
- 805: local information storage unit
- 1003: information registration unit
- 1004: local information storage unit
- 1005: analysis unit
- 1006: superimposition data selection unit
- 1007: superimposition data storage unit
- 1008: superimposition unit

### Best Mode for Carrying Out the Invention

Embodiments according to the present invention will be described below with reference to the drawings. It is to be noted that, although the present invention will be described with following embodiments and the drawings, they are intended not for the purpose of limitation but for exemplification only.

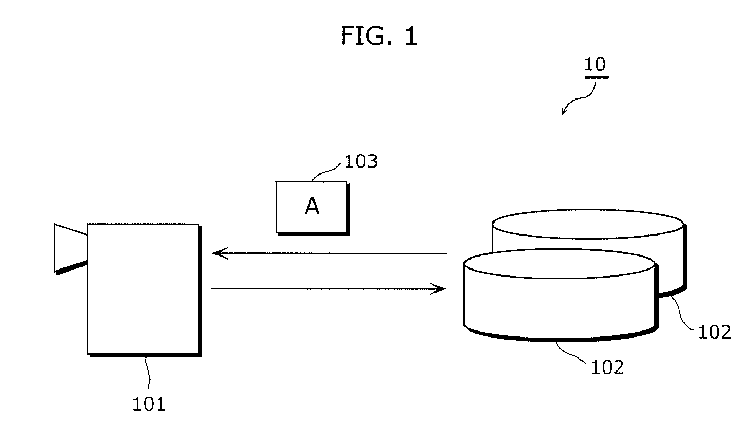

FIG. 1 is a schematic view of a superimposition information presentation system 10 according to an embodiment of the present invention. The superimposition information presentation system 10 includes: a sever 102 that holds superimposition information (also referred to as "superimposition data") 103; and a superimposition information presentation apparatus 101 that is capable of obtaining (or, receiving) the superimposition information 103 suitable to a user's preference, and superimposing the superimposition information 103 on a moving image or a static image (hereinafter simply referred to as "image") captured by a user and presenting the image having the superimposition information 103. It is to be noted that the superimposition information presentation system 10 may include more than one sever 102, and the superimposition information presentation apparatus 101 obtains (or, receives), from one of the servers 102, the superimposition information 103 suitable to a user's preference. It is to be noted that a specific example for the superimposition information 103 described above includes: advertisement information related to a product or an event; or service information for providing a user with convenience.

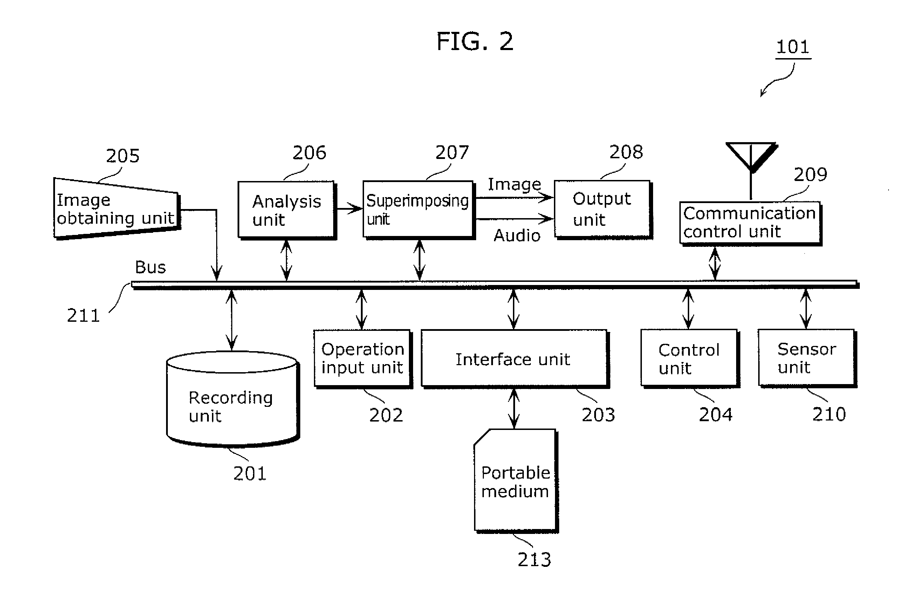

FIG. 2 is a block diagram which illustrates an overview of a functional structure of the superimposition information presentation apparatus 101 according to an embodiment of the present invention. The superimposition information presentation apparatus 101 includes: a recording unit 201; an operation input unit 202; an interface unit 203; a control unit 204; an image obtaining unit 205; an analysis unit 206; a superimposing unit 207; an output unit 208; a communication control unit 209; and a sensor unit 210, each structural component connected with each other via a bus 211.

The recording unit 201 is, for example, a hard disk device and records information for use in the superimposition information presentation apparatus 101. More specifically, the recording unit 201 records image data of a captured image, information (or, data) to be superimposed, information inputted by a user, and the like. Such data or information is obtained from the image obtaining unit 205, the sever 102, or the portable medium 213, or through input by the user, and the like. It is to be noted that the information to be superimposed may include something appealing to the ear (audio), in addition to something appealing to the eye (an image or a text).

The operation input unit 202 is, for example, a keyboard, a mouse, a remote controller, and the like, and receives an operation by the user.

The interface unit 203 is a unit that carries out: detection of the portable medium 213; conversion of data exchanged between the superimposition information presentation apparatus 101 and the portable medium 213; and the like.

The control unit 204 is, for example, a microcomputer including a ROM, a RAM, and the like for storing a control program, and controls an operation of each of the structural components of the superimposition information presentation apparatus 101. Further, the control unit 204 selects information to be superimposed on an image based on local information stored in the recording unit 201. Here, "local information" refers to information that defines a user's preference and characteristics, and is registered in association with a superimposition data ID.

The image obtaining unit 205 is, for example, a digital camera provided with a Charge Coupled Device (CCD), and captures a landscape and the like, converts the captured image into image data, and stores the image data in the recording unit 201.

The analysis unit 206 analyzes the image data obtained by the image obtaining unit 205, extracts a characterizing portion of the image (for example, a two-dimensional code, a character string, or a building), and identify related information that is related to the information to be superimposed, based on the extracted characterizing portion. A specific example for related information includes URL information that indicates a particular site (in other words, capable of identifying a particular sever 102)

The superimposing unit 207 superimposes the information selected by the control unit 204 on the image obtained by the image obtaining unit 205.

The output unit 208 is, for example, a liquid crystal display device provided with a speaker, and presents the user with the image on which information is superimposed (further, audio corresponding to the image).

The communication control unit 209 is a part that controls a communication between the sever 102 (which is accessed via a network or directly accessed) and the superimposition information presentation apparatus 101. More specifically, the communication control unit 209 obtains, from the sever 102, the information to be superimposed.

The sensor unit 210 includes, for example, a clock, a GPS, and the like, and obtains information such as time information, position information of the superimposition information presentation apparatus 101, and weather information. Further, the sensor unit 210 includes a microphone, and receives audio when the above-described image obtaining unit 205 captures image, converts the audio into audio data, and stores the audio data in the recording unit 201. It is to be noted that the above-described image obtaining unit 205 may also include the microphone for receiving audio.

The above-described structure makes it possible that the superimposition information presentation apparatus 101 superimposes to-be-superimposed information received from the communication control unit 209 on an appropriate position of image or audio obtained from the image obtaining unit 205 and presents the image or audio having the superimposed information to a user.

It is to be noted that the image obtaining unit and the sensor unit are examples for obtainment unit.

### (First embodiment)

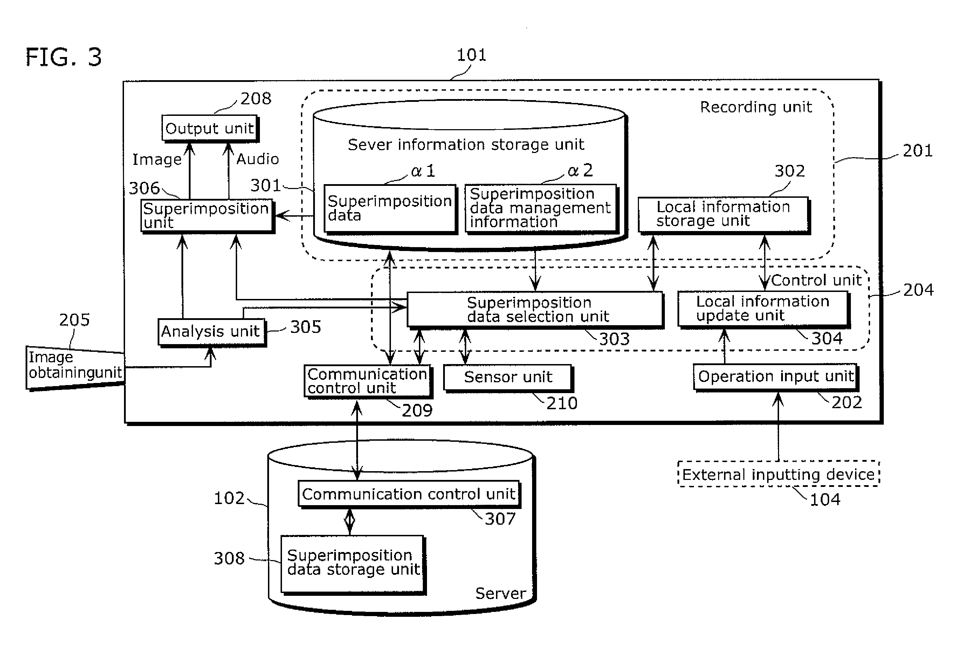

The present embodiment describes an embodiment that information suitable to a user's preference is superimposed on an image (further, a priority is given to candidate information for superimposition), by using local information held in the superimposition information presentation apparatus 101. The superimposition information presentation apparatus 101 according to the present embodiment, when an image is obtained from the image obtaining unit 205, reads, from the recording unit 201 (more specifically, a local information storage unit 302 in FIG. 3), local information in which a user's preference and the like are described, and obtains information to be superimposed from the sever 102 that is identified based on the local information.

FIG. 3 is a block diagram which illustrates a more detailed functional structure of the superimposition information presentation apparatus 101 illustrated in FIG. 2 described above. It is to be noted that the same numerals are assigned to the same structural components as in above-described FIG. 2 and descriptions for them will be omitted.

As illustrated in FIG. 2 and FIG. 3, the recording unit 201 (a portion enclosed by a dashed line in FIG. 3) includes a sever information storage unit 301 and the local information storage unit 302. Further, the control unit 204 (a portion enclosed by a dashed line in FIG. 3) includes a superimposition data selection unit 303 and a local information update unit 304.

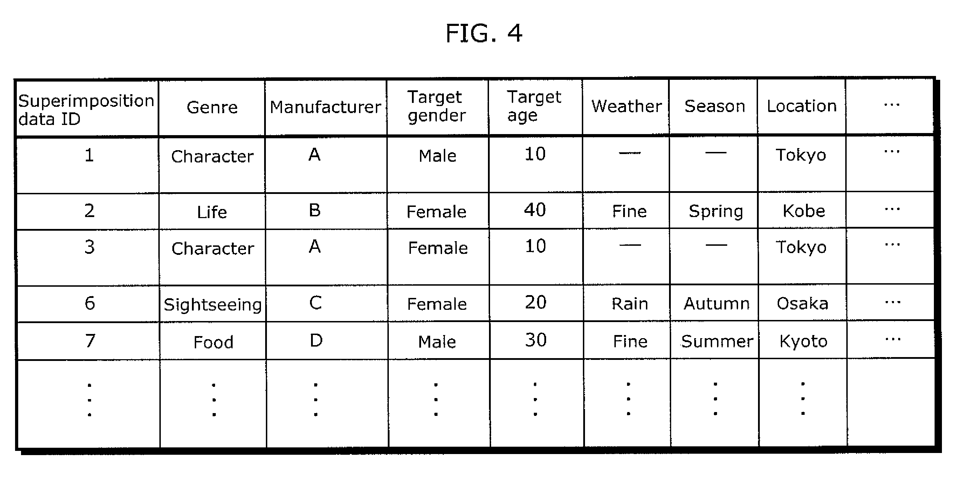

The sever information storage unit 301 stores superimposition data a1 obtained from the sever 102 via the communication control unit 209 and superimposition data management information a2 for managing the superimposition data a1. The superimposition data a1 actually is the information to be superimposed on an image obtained from the image obtaining unit 205. Further, the superimposition data management information a2 defines information related to the superimposition data a1. More specifically, the superimposition data management information a2 defines a genre, a manufacturer, and so on for each superimposition data ID in a table format as illustrated in FIG. 4. The superimposition data management information a2 is generated based on superimposition data characteristic information obtained together with the superimposition data a1 that is obtained via the communication control unit 209. It is to be noted that the superimposition data characteristic information may be obtained through the communication control unit 209, or may be generated by analyzing the superimposition data a1.

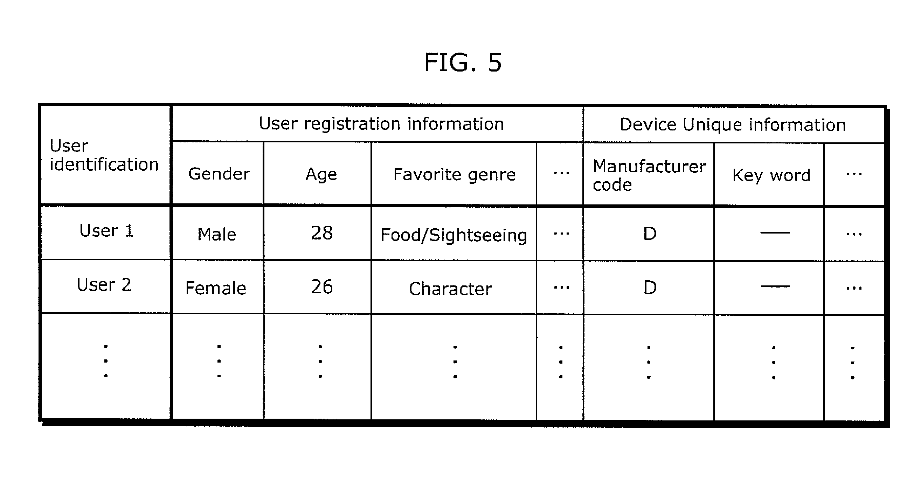

The local information storage unit 302 is a part that holds information (local information) related to a user of the superimposition information presentation apparatus 101, and holds: information unique to the superimposition information presentation apparatus 101; a characteristic and preference information of a user obtained via the operation input unit 202; time information; position information; information obtained from the sensor unit 210; and so on. Here, the local information is information having a structure as illustrated in FIG. 5, for example.

The superimposition data selection unit 303 is a part that identifies information to be superimposed, according to a user's preference or a situation at the time of shooting. The superimposition data selection unit 303 identifies at least one sever 102 that has been identified by the analysis unit 305 and that holds the information to be superimposed, and obtains the superimposition data a1 from the communication control unit 209. In the case where the obtained superimposition data a1 exists as plural items of data, the superimposition data management information a2 and sensor information is obtained respectively from the local information storage unit 302 and the sensor unit 210. A priority is given to the superimposition data a1 by using the obtained information items, so that information to be superimposed is uniquely identified in the end. In the case where the superimposition data management information a2 as illustrated in FIG. 4 exists and an image captured by a user 1 in FIG. 5 exists, it can be judged that the superimposition data having the superimposition data ID "7" is the data most suitable, among items of superimposition data in FIG. 4, to the preference of the user 1. When the superimposition data a1 is identified, a superimposition data selection unit 303 updates the superimposition data management information a2, so that only the identified superimposition data a1 is available.

The local information update unit 304 updates local information held by the local information storage unit 302 when an operation for updating the local information is received via the operation input unit 202.

The analysis unit 305 is a part that corresponds to the analysis unit 206 in FIG. 2 described above. The image obtained by the image obtaining unit 205 is analyzed, and the sever 102 that holds a candidate of information to be superimposed is identified by using a characterizing portion of the image. For example, URL information is obtained, for identifying the sever 102, by extracting two-dimensional bar-code information embedded in the image, or information that identifies the server is obtained by using a character string or a pattern on the image. Further, information that identifies the sever described above may be identified, or information to be superimposed may be specified, by extracting blinking of light or light intensity not only in a static image but also in a moving image and analyzing such a wave pattern of light. Furthermore, information that identifies the sever described above may be identified, or information to be superimposed may be specified, by analyzing not only an image but also a wave pattern of audio that has been obtained together when capturing the image.

The superimposing unit 306 is a part that corresponds to the superimposing unit 207 in FIG. 2 described above. The superimposing unit 306 superimposes the superimposition data a1 that has been specified by the superimposition data selection unit 303, on the image inputted from the image obtaining unit 205. A position on which the data is superimposed may be obtained from the characterizing portion that has been analyzed by the analysis unit 305, or details described in the superimposition data management information a2 may be used.

The sever 102 includes a communication control unit 307 and a superimposition data storage unit 308.

The communication control unit 307 uses the URL information obtained by the analysis unit 305 and accesses the corresponding server apparatus to obtain a candidate of the superimposition information 103.

Further, the communication control unit 307 is a unit that retrieves, from the superimposition data storage unit 306, the superimposition data a1 that has been inquired by the superimposition data selection unit 303, and transfers, to the superimposition information presentation apparatus 101, related information of the retrieved superimposition data a1 and the superimposition data. In the case where Plural items of superimposition data a1 are found as the candidate for a response to the same inquiry, for example, all of the items of superimposition data a1 are transferred. It is to be noted that the communication control unit 307 may obtain the candidate for the superimposition information 103 by holding plural items of URL information in advance and accessing servers each corresponding to one of the plural items of URL information (in other words, by broadcasting).

The superimposition data storage unit 308 is a part that holds plural items of superimposition data a1, and in response to a superimposition data retrieval request from the communication control unit 307, transmits corresponding superimposition data a1.

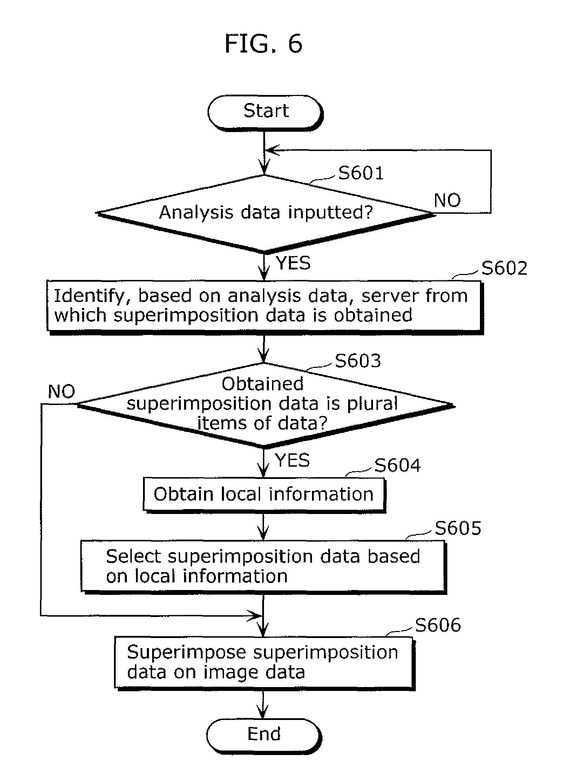

FIG. 6 is a flowchart which illustrates an operational flow of the superimposition information presentation apparatus 101 according to the present embodiment.

First, the superimposition data selection unit 303 waits until the analysis unit 305 finishes analyzing an image obtained from the image obtaining unit 205 (Step S601). When data indicating a result of the analysis is inputted from the analysis unit 305, the superimposition data selection unit 303 identifies, using the data, the sever 102 from which information to be superimposed is obtained, and transmits a superimposition data obtainment request to the communication control unit 209. In this case, the superimposition data obtainment request is not necessarily limited to one request, but it may be plural requests. The communication control unit 209 communicates with an external sever 102 based on the superimposition data obtainment request, and stores the obtained superimposition data a1 and the superimposition data management information a2 in the sever information storage unit 301 (Step 5602).

The superimposition data selection unit 303, when receiving a notification of completion of obtaining the superimposition data a1 from the communication control unit 209, obtains the superimposition data management information a2 from the sever information storage unit 301 and analyzes the details of the superimposition data management information a2 (Step 5603). In the case where a result of the analysis shows that the superimposition data a1 exists as plural items of data (Step S603: Yes), the superimposition data selection unit 303 obtains: local information from the local information storage unit 302; and time information, position information, and the like from the sensor unit 210 (Step S604), and gives priority to the superimposition data a1 based on the obtained local information and superimposition data management information a2, thereby selecting information to be superimposed (Step S605).

Further, in the case where only one superimposition data a1 exists (Step 5603: No), the superimposition data selection unit 303 notifies the superimposing unit 306 of the selected superimposition data a1.

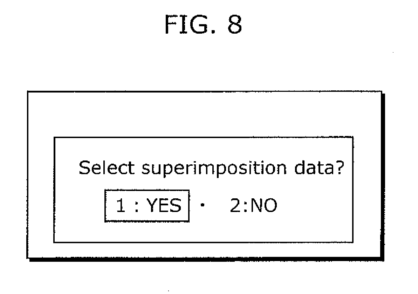

Selecting to-be-superimposed information based on priority performed by the superimposition data selection unit 303 may be carried out with display on the output unit 208 as illustrated in FIG. 8 and by receiving an instruction from the user (Step 5605).

When the superimposition data a1 is selected, the superimposition data selection unit 303 notifies the superimposing unit 306 of completion of selecting superimposition data. When receiving the notification, the superimposing unit 306 superimposes the superimposition data a1 obtained from the sever information storage unit 301 on an image inputted from the image obtaining unit 205 via the analysis unit 305 (Step S606). A position on which the data is to be superimposed may be determined based on the information inputted from the analysis unit 305, or may be determined based on information that exists in the superimposition data a1.

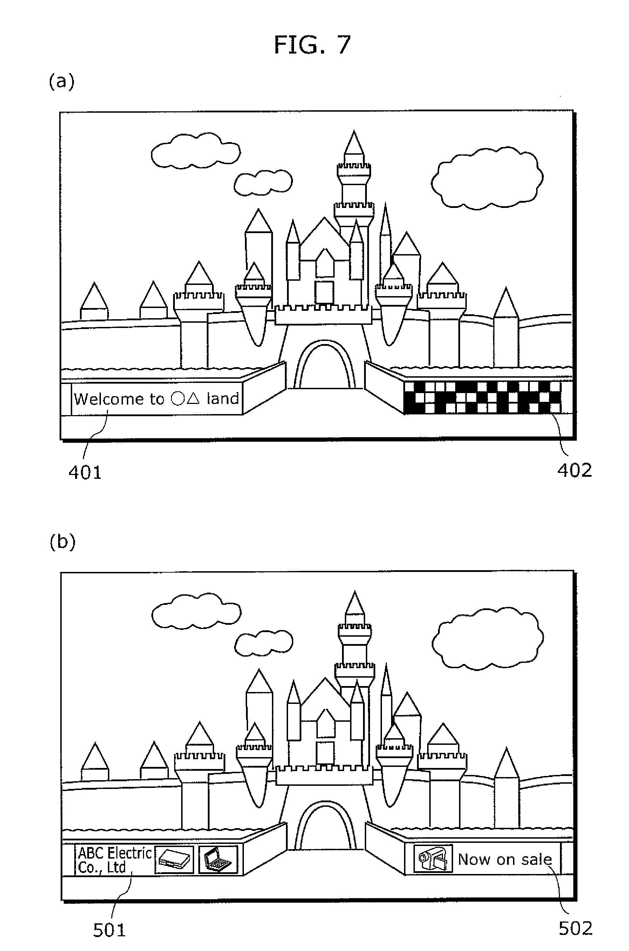

FIG. 7 (a) and (b) is an example of display on the output unit 208 of the superimposition information presentation apparatus 101 according to the present embodiment. FIG. 7(a) is an example of an image shot by a user. Further, FIG. 7(b) is an example which illustrates information superimposed by the superimposition information presentation apparatus 101. The analysis unit 305 analyzes the image of a character string in a region 401 and the image of bricks representing a two-dimensional code in a region 402, and by using a result of the analysis, extracts information for identifying the sever 102 or identifies to-be-superimposed information stored in the sever information storage unit 301 to notify the superimposition data selection unit 303. The superimposition data selection unit 303 obtains from the identified sever 102 described above, or identifies the superimposition data a1 stored in the sever information storage unit 301, and notifies the superimposing unit 306. The superimposing unit 306 controls display on the output unit 208 so as to display advertising information 501 and advertising information 502 by replacing the image of the character string in the region 401 and the image of the bricks representing the two-dimensional code in the region 402 with the superimposition data a1 notified by the superimposition data selection unit 303.

With the processes described above, it is made possible to superimpose information suitable to a user's preference on an image obtained by the image obtaining unit 205.

### (Second embodiment)

The present embodiment describes a superimposition information presentation apparatus 111 that presents information to be superimposed on a image according to a user's preference. The difference between the superimposition information presentation apparatus 111 and the superimposition information presentation apparatus 101 according to the first embodiment described above is a location in which local information is stored. The local information is stored in the superimposition information presentation apparatus 101 in the first embodiment, whereas local information is stored in a portable medium 213 in the second embodiment.

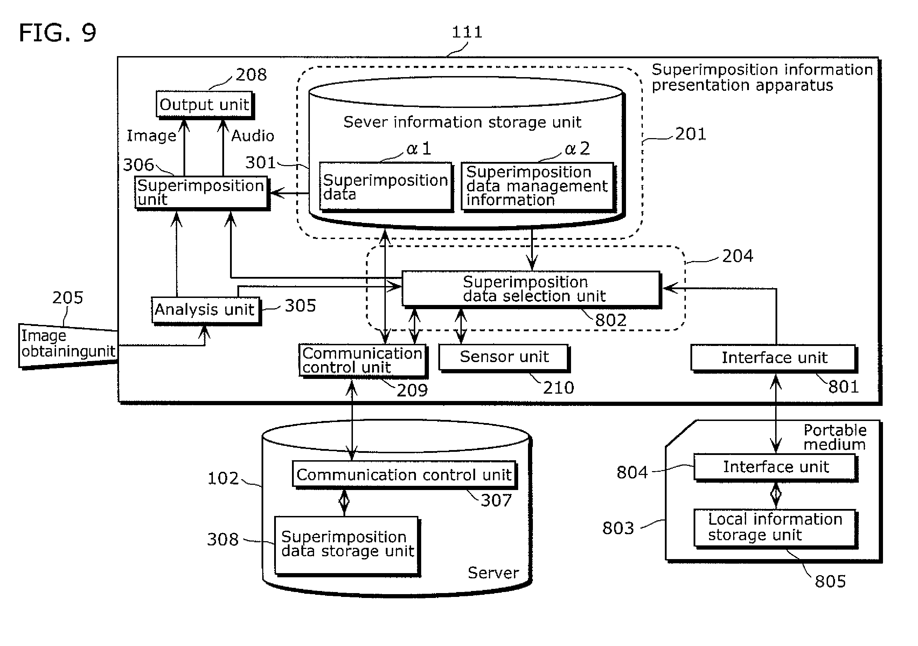

FIG. 9 is a block diagram which illustrates a functional structure of the superimposition information presentation apparatus 111 and the portable medium 803 according to the present embodiment. It is to be noted that the same numerals are assigned to the same structural components as in above-described FIG. 2 or FIG. 3 and descriptions for them will be omitted.

The superimposition information presentation apparatus 111 further includes an interface unit 801, and the control unit 204 includes a superimposition data selection unit 802.

The interface unit 801 is a part that corresponds to the interface unit 203 in FIG. 2 described above. The interface unit 801 transfers the local information obtained from the portable medium 803 to the superimposition data selection unit 802.

The superimposition data selection unit 802 is almost the same in the function as the superimposition data selection unit 303 in FIG. 3, but obtains local information from a different source. In the present embodiment, local information is obtained from the portable medium 803 via the interface unit 801.

The portable medium 803 includes an interface unit 804 and a local information storage unit 805. The interface unit 804 is a unit that controls data exchange with the interface unit 801 in the superimposition information presentation apparatus 111. More specifically, local information held in the local information storage unit 805 is transferred as a response when a local information obtainment request is received from the interface unit 801. The local information obtainment request sent from the interface unit 801 to the interface unit 804 can include various requests such as a request for obtaining all of, or only a portion of the local information registered in the portable medium 803.

The local information storage unit 805 holds characteristics or preference information of a user. The local information in the portable medium 803 can be compiled by using an external device such as a Personal Computer (PC), and by operating from the operation input unit 202.

Next, a processing flow of selection of superimposition data a1 and performing superimposition according to the present embodiment will be described. The processing flow is basically the same as the flowchart in FIG. 6 described above. The part which is different is the process for obtaining local information (Step S 604).

In the case of the present embodiment, local information is obtained from the portable medium 803 via the interface unit 801.

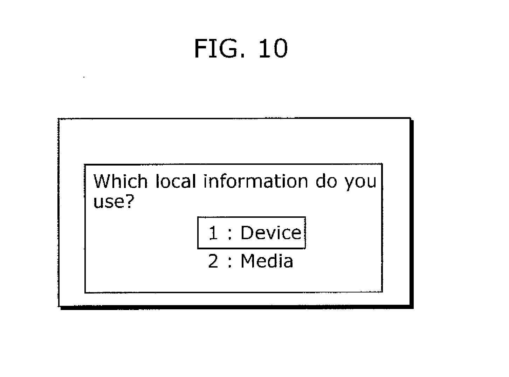

Further, in the case where both of the superimposition information presentation apparatus 111 and the portable medium 803 include the local information storage unit 302 and the local information storage unit 805, respectively, it may be possible: to use all of the registered local information; to provide a display as illustrated in FIG. 10 and allow a user to select which one of local information to be used; or to automatically identify local information by providing the local information with a priority.

### (Third embodiment)

Whereas image data analysis and selection and superimposition of superimposition data are carried out in the superimposition information presentation apparatus 101 or the superimposition information presentation apparatus 111 in the first embodiment and the second embodiment described above, these processes are carried out in the sever 122 in a third embodiment.

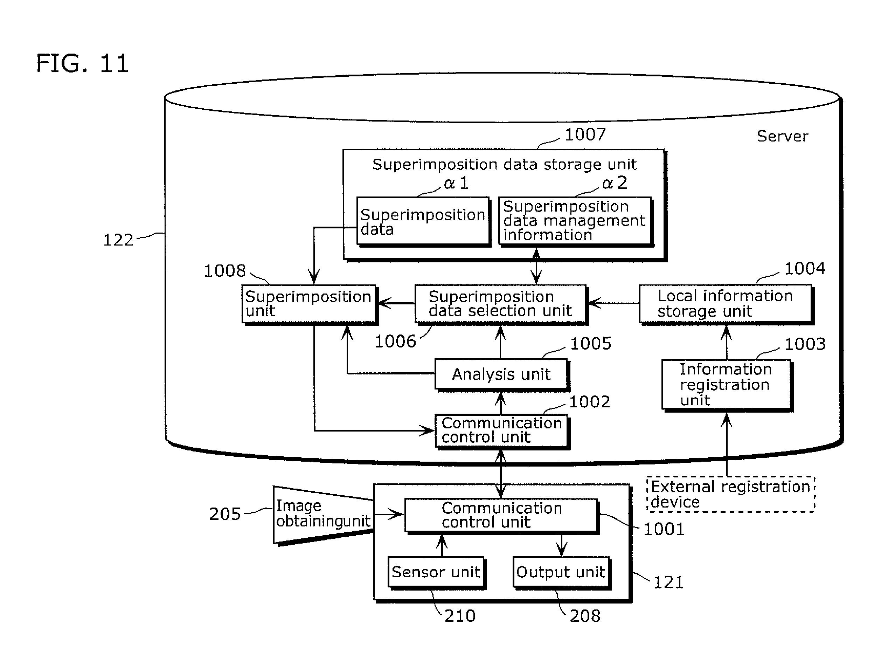

FIG. 11 is a diagram which illustrates structural components of the superimposition information presentation apparatus 121 and the sever 122 according to the third embodiment. The same numerals are assigned to the same structural components as in above-described FIG. 2 or FIG. 3 and descriptions for them will be omitted.

The superimposition information presentation apparatus 121 includes a communication control unit 1001.

The communication control unit 1001 transmits: an image inputted from the image obtaining unit 205; sensor information obtained from the sensor unit 210; information unique to the superimposition information presentation apparatus 121; and information related to a user, to a communication control unit 1002 in the sever 122. Unlike the first embodiment and the second embodiment described above, the inputted image is transmitted to the sever 122 without being analyzed.

The sever 122 includes: the communication control unit 1002; a information registration unit 1003; a local information storage unit 1004; an analysis unit 1005; a superimposition data selection unit 1006; a superimposition data storage unit 1007; and a superimposing unit 1008.

The communication control unit 1002 is a unit that controls data exchange with the superimposition information presentation apparatus 121. More specifically, the communication control unit 1002 is a part that obtains image data and user information from the superimposition information presentation apparatus 121. Further, the communication control unit 1002 is a part that transfers data superimposed in the sever 122 to the superimposition information presentation apparatus 121.

The information registration unit 1003 is a part that resister user information on the local information storage unit 1004 of the server. A user sets information specific to the user, which includes personal information, preference, and the like, using an external registration device, such as a PC.

The local information storage unit 1004 is a part that hold information specific to the user. More specifically, the local information storage unit 1004 holds a table that associates a user with preference specific to the user, similarly to the local information storage unit 302 that holds local information as illustrated in FIG. 5 described above.

The analysis unit 1005 is a part that analyzes an image obtained via the communication control unit 1002. The analysis unit 1005 analyzes an image inputted from the image obtaining unit 205 and extracts a characteristic to be a candidate for information to be superimposed.

The superimposition data selection unit 1006 selects information to be superimposed based on: characteristic information that is the candidate for superimposition data and is inputted from the analysis unit 1005; superimposition data management information a2 held by the superimposition data management unit 1007; and local information specific to the user, which is obtained from the local information storage unit 1004.

The superimposition data storage unit 1007 holds data a1 that is the data to be superimposed and superimposition data management information a2 that is characteristic information of the data a1.

The superimposing unit 1008 is a part that superimposes the selected superimposition data a1 on the image data inputted from the analysis unit 1005, in response to a notification of completing a superimposition data selection process from the superimposition data selection unit 1006.

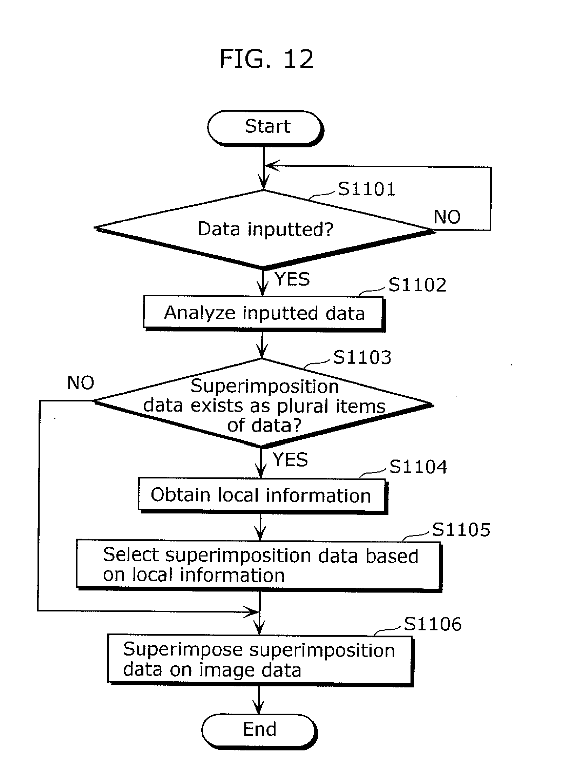

FIG. 12 is a flowchart which illustrates a flow of a superimposition data selection process and a superimposition process according to this embodiment.

First, the communication control unit 1002 waits until data is inputted from the communication control unit 1001 (Step 51101).

When data is inputted, the analysis unit 1005 analyzes the data inputted in Step S1101 and analyses a candidate for characteristic information for identifying superimposition data based on the inputted data (Step S1102).

The superimposition data selection unit 1006 identifies superimposition data a1 to be superimposed based on the characteristic information of candidate for superimposition data which has been identified in Step S1102 and superimposition data management information a2. Here, in the case where superimposition data a1 exists as plural items of data (Step 51103: Yes), local information is obtained from the local information storage unit 1004 (Step S1104).

Further, in the case where only one or less item of superimposition data a1 exists, the superimposition data selection unit 1008 is notified of completion of selecting superimposition data (Step S1103: No).

In the case where plural items of superimposition data are obtained, a priority is given to superimposition data based on the obtained local information and the superimposition data management information a2, so that information to be superimposed is selected. Further, this process may be carried out not automatically, but by providing a display on the output unit 208 as illustrated in FIG. 8 and allowing a user to select (Step S1105).

When the superimposition data is selected, the superimposing unit 1008 is notified of completion of selecting superimposition data. The superimposing unit 1008, in response to the notification, carries out the processing of superimposing the superimposition data a1 obtained from the superimposition data storage unit 1007 on camera data inputted from the analysis unit 1004 (Step S1106). A position on which the data is to be superimposed may be determined based on the information inputted from the analysis unit 1005, or may be determined based on information that exists in the superimposition data a1.

### (Forth embodiment)

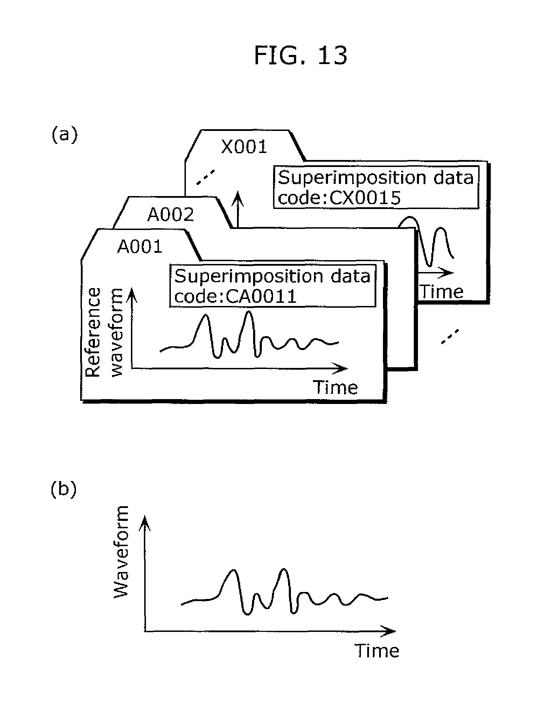

FIG. 13 (a), (b) is a diagram for explaining a method of determining, by an analysis unit 305 of the superimposition information presentation apparatus 101 described above, information and the like for identifying a sever that obtains information to be superimposed on an image, based on blinking of light that has been captured or audio that has been obtained. FIG. 13(a) is an example of a reference waveform stored in the recording unit 201 and related to a waveform indicating intensity of a light or waveform of audio included in a captured image. On the other hand, FIG. 13(b) is an example of a waveform that has been extracted by analyzing blinking of light in an image that has actually been shot or recorded audio. The analysis unit 305 identifies a reference waveform that matches with a waveform that has actually been extracted (FIG. 13(b))(or, has high similarity), obtains a superimposition data code (for example, CA0011) that has been associated with the identified reference waveform, and notifies the superimposition data selection unit 303 of address information of a sever that is associated with the obtained superimposition data code.

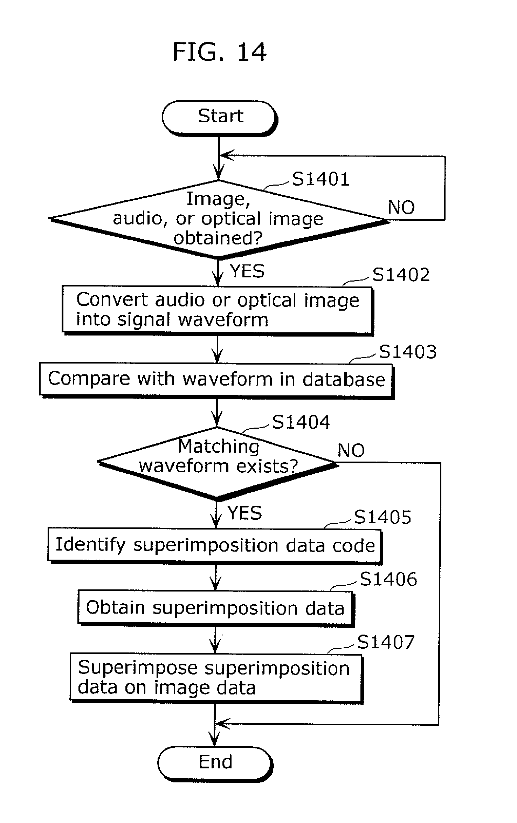

FIG. 14 is a flowchart which illustrates an operational flow of the superimposition information presentation apparatus 101, in the case where the analysis unit 305 is used, according to the present embodiment.

First, when a target image on which information is to be superimposed and audio or an optical image are obtained via the image obtaining unit 205 and the sensor unit 210 (Step S1401: Yes), the analysis unit 305 analyzes and converts into a signal waveform, the obtained audio or light picture (Step S1402), and compares the signal waveform with the reference waveform within the recording unit 201 (Step S1403). Here, in the case where a matching waveform (or, a waveform having high similarity) exists (Step S1404: Yes), a superimposition data code associated with the reference waveform is identified (Step 51205), and superimposition data is obtained by accessing a sever corresponding to the superimposition data code (Step S1406). The superimposing unit 306 superimposes obtained superimposition data on a target image (Step S1407).

With the processes described above, it is made possible to superimpose information suitable to a user's preference on an image inputted from the image obtaining unit 205.

It is to be noted that, although in the first embodiment and the second embodiment, a server from which information to be superimposed is obtained is identified within a network, by analyzing image data inputted via the image obtaining unit 205, information to be superimposed may also be obtained from a local server. For example, by obtaining, from a server that can be connected to only in an amusement park and the like, information to be superimposed, it made possible to obtain information that can be obtained only at the site. As described above, information to be superimposed may be obtained by identifying a shooting location of an image and accessing a site that provides information corresponding to the location.

Further, in the above-described first to third embodiments, it may be possible, by matching analyzed data and data registered on a server, to notify a user of the information. For example, in the case where a wanted criminal suspect has been identified from an analysis of an image of a landscape shot arbitrary by a user, a notification may be displayed on a device the user holds, or a report may automatically be sent to a facility such as a nearby police.

Further, in the above-described first to third embodiments, although the local information is registered by a user, it is not limited to this. The local information may be downloaded from a site and the like, or may be obtained by another user.

Further, in the above-described first to third embodiments, although information is superimposed every time, it may be possible to make a user decide whether or not information should be superimposed.

Further, it may be possible, according to the present invention, to include an audio conversion unit that converts, without displaying, information to be superimposed into audio data, to record the converted audio data on a portable medium and the like, and when reproducing an image, to reproduce audio in association with the image (or, to reproduce audio irrespective of the image).

### Industrial Applicability

A superimposition information presentation apparatus according to the present invention is useful in that information suitable to a user's preference can be superimposed on an image shot arbitrarily by the user. Further, it can be applied to other applications such as a surveillance system.

## Claims

1. A superimposition information presentation apparatus which superimposes information in association with an image and presents the image having the superimposed information, said apparatus comprising:
an image obtaining unit configured to obtain an image;
an analysis unit configured to analyze the obtained image and to extract related information that relates to to-be-superimposed information;
a superimposition data selection unit configured to identify the to-be-superimposed information based on the extracted related information; and
a superimposing unit configured to superimpose the identified information on the obtained image and to present the image having the superimposed information.

2. The superimposition information presentation apparatus according to Claim 1,
wherein said image obtaining unit is further configured to obtain a moving image or audio in association with the obtained image, and
said analysis unit is further configured to identify a reference waveform among reference waveforms each representing a corresponding predetermined moving image or audio based on a waveform representing the obtained moving image or audio, and to extract the related information based on the identified reference waveform.

3. The superimposition information presentation apparatus according to Claim 1, further comprising
a local information storage unit configured to store information related to a user of said superimposition information presentation apparatus,
wherein said superimposition data selection unit is further configured to give a priority to the identified information based on the local information in the case where plural items of the information have been identified, and
said superimposing unit is configured to superimpose the information having a highest priority on the obtained image and to present the image having the superimposed information.

4. The superimposition information presentation apparatus according to Claim 1, further comprising
a communication control unit configured to obtain a candidate for the to-be-superimposed information by accessing a server apparatus corresponding to URL information,
wherein the obtained image includes a two-dimensional code or a character string,
said analysis unit is configured to extract the URL information for accessing a predetermined server by analyzing the two-dimensional code or the character string in the obtained image,
said communication control unit is configured to obtain the candidate for the to-be-superimposed information from the server apparatus by using the extracted URL information, and
said superimposition data selection unit is configured to select one item of the to-be-superimposed information from the obtained candidates for the to-be-superimposed information based on the local information.

5. The superimposition information presentation apparatus according to Claim 1,
wherein the local information includes information indicating at least one of: an age; a gender; a nationality; a weather; time; and a location,
the age, the gender, and the nationality being information of a user of said superimposition information presentation apparatus, and
the weather; the time; and the location being information at a time of obtaining the image.

6. The superimposition information presentation apparatus according to Claim 1, further comprising
a shooting location identifying unit configured to identify a location where the image has been obtained,
wherein said superimposition data selection unit is further configured to identify the to-be-superimposed information based on the identified location.

7. The superimposition information presentation apparatus according to Claim 1, further comprising
an audio converting unit configured to convert the information identified by said superimposition data selection unit into audio data,
wherein said superimposing unit is further configured to output audio associated with the image by using the converted audio data.

8. A server apparatus which provides a terminal apparatus with information to be presented in association with an image, said server apparatus comprising:
a communication control unit configured to receive image data from the terminal apparatus;
an analysis unit configured to analyze the received image data, and to extract related information that relates to to-be-presented information; and
a superimposition data selection unit configured to identify the to-be-presented information based on the extracted related information,
wherein said communication control unit is further configured to transmit the identified information to the terminal apparatus.

9. A superimposition information presentation system comprising a terminal apparatus and a server apparatus,
wherein said terminal apparatus includes:
an image obtaining unit configured to obtain an image; and
a first communication control unit configured to transmit image data representing the obtained image to said server apparatus,
said server apparatus includes:
a second communication control unit configured to receive image data from said terminal apparatus;
an analysis unit configured to analyze the received image data and to extract related information that relates to to-be-superimposed information; and
an superimposition data selection unit configured to identify to-be-presented information based on the extracted related information, and
wherein said second communication control unit is further configured to transmit the identified information to said terminal apparatus.

10. A superimposition information presentation method for superimposing information in association with an image and presenting the image having the superimposed information, said method comprising:
obtaining an image;
analyzing the obtained image and extracting related information that relates to to-be-superimposed information;
identifying the to-be-superimposed information based on the extracted related information; and
superimposing the identified information on the obtained image and presenting the image having the superimposed information.

11. A superimposition information providing method used in a server apparatus which provides a terminal apparatus with information to be presented in association with an image, said superimposition information providing method comprising:
receiving image data from the terminal apparatus;
analyzing the received image data and extracting related information that relates to to-be-presented information; and
identifying the to-be-presented information based on the extracted related information,
wherein further in said receiving, the identified information is transmitted to the terminal apparatus.

12. A method for using superimposition information used in a superimposition information presentation system including a terminal apparatus and a server apparatus, said method comprising:
in the terminal apparatus,
obtaining an image; and
transmitting image data representing the obtained image to the server apparatus; and
in the server apparatus,
receiving image data from the terminal apparatus;
analyzing the received image data and extracting related information that relates to to-be-superimposed information; and
identifying to-be-presented information based on the extracted related information,
wherein further in said receiving, the identified information is transmitted to the terminal apparatus.
